(19) Europäisches Patentamt / European Patent Office / Office européen des brevets

(11) **EP 4 455 325 A1**

(12) **EUROPEAN PATENT APPLICATION**
published in accordance with Art. 153(4) EPC

(43) Date of publication:
**30.10.2024 Bulletin 2024/44**

(21) Application number: 23743379.2

(22) Date of filing: **24.01.2023**

(51) International Patent Classification (IPC):
$C22C\ 29/08^{(2006.01)}$    $C22C\ 30/02^{(2006.01)}$
$B33Y\ 10/00^{(2015.01)}$    $B33Y\ 70/00^{(2020.01)}$
$B22F\ 10/25^{(2021.01)}$    $C22C\ 1/051^{(2023.01)}$

(52) Cooperative Patent Classification (CPC):
**B22F 10/25; B33Y 10/00; B33Y 70/00; C22C 1/051; C22C 29/08; C22C 30/02**

(86) International application number:
**PCT/JP2023/002100**

(87) International publication number:
**WO 2023/140387 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.01.2022 JP 2022008541**

(71) Applicant: **Proterial, Ltd.**
**Tokyo 135-0061 (JP)**

(72) Inventors:
- **IWASAKI, Tomio**
 **Tokyo 100-8280 (JP)**
- **SUGAWARA, Hiroki**
 **Tokyo 135-0061 (JP)**
- **KOSEKI, Shuho**
 **Tokyo 135-0061 (JP)**
- **OHNUMA, Hiroshi**
 **Tokyo 135-0061 (JP)**

(74) Representative: **Strehl Schübel-Hopf & Partner Maximilianstrasse 54 80538 München (DE)**

(54) **WC-BASED CEMENTED CARBIDE, MIXED POWDER FOR PRODUCTION OF WC-BASED CEMENTED CARBIDE, WC-BASED CEMENTED CARBIDE MEMBER AND METHOD FOR PRODUCING WC-BASED CEMENTED CARBIDE MEMBER**

(57) A WC-based cemented carbide contains, in terms of mass %, Co of 10 % to 40 %; and Cu of 5 % to 15 %, the balance consisting of at least one selected from the group consisting of Ti, Zr and Cr, and W, B, C and inevitable impurities. Thus, it is possible to provide a WC-based cemented carbide having a high abrasion resistance while adopting a configuration advantageous for a high thermal conductivity.

*FIG. 7*

EP 4 455 325 A1

# Description

## Technical Field

The present invention relates to a WC-based cemented carbide, a mixed powder for production of the WC-based cemented carbide, a WC-based cemented carbide member and a method for producing the WC-based cemented carbide member.

## Background Art

A hot stamping method is a method in which a workpiece heated to a high temperature is press-molded, and quenching is performed by cooling in a mold at the same time. In the hot stamping die, improvement of a thermal conductivity of the mold material is desired in order to improve hardenability and increase efficiency of production. In addition, an abrasion resistance is required in order to reduce damage to the mold due to a scale adhered to the workpiece heated to a high temperature.

For example, a cemented carbide (hereinafter referred to as "WC-based cemented carbide") which is a composite material in which a hard WC are dispersed in a metallic bonding phase such as Co is exemplified as a material that achieves both thermal conductivity and abrasion resistance. The WC-based cemented carbide is used for a cutting tool and the like because of its excellent abrasion resistance. On the other hand, the thermal conductivity is excellent, and the thermal conductivity of the WC-based cemented carbide is higher than that of a tool steel.

Patent Literature 1 discloses a WC-based cemented carbide in which tungsten carbide particles are bonded by a bonding phase of cobalt or a cobalt alloy, in which the content of the cobalt or the cobalt alloy is 35 to 50 mass %, and fine tungsten carbide particles exhibit a predetermined distribution.

Patent Literature 2 discloses a WC-based cemented carbide member that is an additive manufacturing body including WC particles, Cu, and a metallic bonding phase composed of at least one of Co, Fe and Cr, in which the content of the WC particles is 40 mass % or more, the content of at least one of Co, Fe and Cr is 25 mass % or more and less than 60 mass %, and the ratio a/b of the content "a" of Cu and the content "b" of at least one of Co, Fe and Cr satisfies a $0.070 \leq a/b \leq 1.000$.

Non-Patent Literature 1 describes that a combination of a molecular dynamics and a density functional theory enables a simulation of both of a covalent bonding system and a metal system.

Non-Patent Literature 2 describes obtaining a stress-strain curve by predicting an ideal strength of silicon along several load paths using a density functional theory.

## Citation List

### Patent Literature

[Patent Literature 1] Japanese Patent Application Laid-Open No. 2016-160500
[Patent Literature 2] International Publication No. 2021/039912

### Non-Patent Literature

[Non-Patent Literature 1] R. Car, M. Parrinello, Unified Approach for Molecular Dynamics and Density-Functional Theory. PHYSICAL REVIEW LETTERS VOLUME 55, NUMBER 22, 2471-2474 (1985)
[Non-Patent Literature 2] S. M.-M. Dubois et al., Ideal strength of silicon: An ab initio study. PHYSICAL REVIEW B 74, 235203 (2006)

## Summary of Invention

### Technical Problem

The WC-based cemented carbide disclosed in Patent Literature 1 is capable of increasing a hardness without impairing a toughness improved by increasing the amount of cobalt by making the tungsten carbide particles distributed in the alloy structure fine. However, a decrease in thermal conductivity due to an increase in the bonding phase remains as a problem.

The WC-based cemented carbide member described in Patent Literature 2 has a high content of Cu and a high thermal conductivity. However, it is required to further increase the hardness.

An object of the present disclosure is to provide a WC-based cemented carbide having a high abrasion resistance while adopting a configuration advantageous for a high thermal conductivity.

**Solution to Problem**

A WC-based cemented carbide of the present disclosure contains in terms of mass %, Co of 10 % to 40 %; and Cu of 5 % to 15 %, the balance consisting of at least one selected from the group consisting of Ti, Zr and Cr, and W, B, C and inevitable impurities.

In the WC-based cemented carbide, in terms of molar ratio, the content of B is 1.5 times to 3 times of the content of Ti, and the content of C is 0.5 times to 2 times of the content of W, preferably.

In addition, in the WC-based cemented carbide, in terms of mass %, the content of Ti is more than 0 % and less than 15 %, the content of B is more than 0 % and less than 6.0 %, the content of W is more than 23 % and 75.5 % or less, and the content of C is more than 1.5 % and 5 % or less, preferably.

Further, in the WC-based cemented carbide, in terms of mass %, the content of Ti is 15 % or more and 35 % or less, the content of B is more than 6.0 % and 16 % or less, the content of W is more than 0 % and 61.5 % or less, and the content of C is more than 0 % and 4 % or less, preferably.

Further, the WC-based cemented carbide includes a first phase containing Ti, W and C; a second phase containing W, B and Co; and a third phase containing Co, in which an area ratio of the first phase in a cross-sectional view is more than 0 % and 50 % or less, preferably.

Further, The WC-based cemented carbide includes a first phase containing Ti, W and C; a second phase containing W, B and Co; and a third phase containing Co, in which an area ratio of the first phase in a cross-sectional view is 30 % or more and 60 % or less, preferably.

Furthermore, the present disclosure includes a mixed powder for manufacturing a WC-based cemented carbide, the mixed powder being obtained by mixing a plurality of kinds of powders to manufacture the WC-based cemented carbide. The average composition of the components constituting the mixed powder includes in terms of mass %, Co of 10 % to 40 %; and Cu of 5 % to 15 %, the balance consisting of at least one selected from the group consisting of Ti, Zr and Cr, and W, B, C and inevitable impurities.

Further, in the WC-based cemented carbide, in terms of molar ratio, the content of B is 1.5 times to 3 times of the content of Ti, and the content of C is 0.5 times to 2 times of the content of W, preferably.

Further, in the WC-based cemented carbide, in terms of mass %, the content of Ti is more than 0 % and less than 15 %, the content of B is more than 0 % and less than 6.0 %, the content of W is more than 23 % and 75.5 % or less, and the content of C is more than 1.5 % and 5 % or less, preferably.

Further, in the WC-based cemented carbide, in terms of mass %, the content of Ti is 15 % or more and 35 % or less, the content of B is more than 6.0 % and 16 % or less, the content of W is more than 0 % and 61.5 % or less, and the content of C is more than 0 % and 4 % or less, preferably.

Further, the present disclosure includes a WC-based cemented carbide member that is formed of a WC-based cemented carbide. The WC-based cemented carbide contains in terms of mass %, Co of 10 % to 40 %; and Cu of 5 % to 15 %, the balance consisting of at least one selected from the group consisting of Ti, Zr and Cr, and W, B, C and inevitable impurities.

Further, in the WC-based cemented carbide, in terms of molar ratio, the content of B is 1.5 times to 3 times of the content of Ti, and the content of C is 0.5 times to 2 times of the content of W, preferably.

Further, in the WC-based cemented carbide, in terms of mass %, the content of Ti is more than 0 % and less than 15 %, the content of B is more than 0 % and less than 6.0 %, the content of W is more than 23 % and 75.5 % or less, and the content of C is more than 1.5 % and 5 % or less, preferably.

Further, in the WC-based cemented carbide, in terms of mass %, the content of Ti is 15 % or more and 35 % or less, the content of B is 6.0 % or more and 16 % or less, the content of W is more than 0 % and 61.5 % or less, and the content of C is more than 0 % and 4 % or less, preferably.

Further, the WC-based cemented carbide member has a hardness of 45 HRC or more and a thermal conductivity of 10 W/(m·K) or more, preferably.

Moreover, the present disclosure includes a WC-based cemented carbide member includes a substrate; and a cemented carbide portion formed on a surface of the substrate, in which the cemented carbide portion is formed of a WC-based cemented carbide, and the WC-based cemented carbide contains in terms of mass %, Co of 10 % to 40 %; and Cu of 5 % to 15 %, the balance consisting of at least one selected from the group consisting of Ti, Zr and Cr, and W, B, C and inevitable impurities.

Further, in the WC-based cemented carbide, in terms of molar ratio, the content of B is 1.5 times to 3 times of the content of Ti, and the content of C is 0.5 times to 2 times of the content of W, preferably.

Further, in the WC-based cemented carbide, in terms of mass %, the content of Ti is more than 0 % and less than 15 %, the content of B is more than 0 % and less than 6.0 %, the content of W is more than 23 % and 75.5 % or less, and the content of C is more than 1.5 % and 5 % or less, preferably.

Further, in the WC-based cemented carbide, in terms of mass %, the content of Ti is 15 % or more and 35 % or less, the content of B is 6.0 % or more and 16 % or less, the content of W is more than 0 % and 61.5 % or less, and the content of C is more than 0 % and 4 % or less, preferably.

The WC-based cemented carbide member has a hardness of 45 HRC or more and a thermal conductivity of 10 W/(m·K) or more.

In addition, the present disclosure includes a manufacturing method of a WC-based cemented carbide member. The manufacturing method includes a melting and solidifying step of irradiating a mixed powder with a heat source beam, melting the mixed powder, and solidifying it thereafter. The average composition of the components constituting the mixed powder includes in terms of mass %, Co of 10 % to 40 %; and Cu of 5 % to 15 %, the balance consisting of at least one selected from the group consisting of Ti, Zr and Cr, and W, B, C and inevitable impurities.

Further, the manufacturing method of a WC-based cemented carbide member further includes a powder mixing step of pumping a plurality of kinds of powders individually together with a carrier gas and mixing to obtain the mixed powder; and a mixed powder feeding step of feeding the mixed powder, preferably.

In addition, the present disclosure includes a manufacturing apparatus of a mixed powder for manufacturing a WC-based cemented carbide. The manufacturing apparatus of the mixed powder includes a mixing unit having a truncated cone shape; and a plurality of pipes connected to the mixing unit. A diameter of an upper bottom surface of the mixing unit is larger than the diameter of a lower bottom surface of the mixing unit. The mixing unit is constituted of an outer wall part visually recognized as an inclined surface part of the truncated cone, and an insertion part corresponding to an inclined surface part of the truncated cone inserted inside the outer wall part. A space formed between the outer wall part and the insertion part is a flow path of a plurality of kinds of powders fed from the plurality of pipes. The plurality of kinds of pipes are connected to an outer edge part of the upper bottom surface of the mixing unit. The plurality of kinds of powders are raw materials of the WC-based cemented carbide, and are components of the mixed powder. The manufacturing apparatus of the mixed powder is configured so that the mixed powder flows out from the lower part of the mixing unit.

Further, the average composition of the components constituting the mixed powder includes in terms of mass %, Co of 10 % to 40 %; and Cu of 5 % to 15 %, the balance consisting of at least one selected from the group consisting of Ti, Zr and Cr, and W, B, C and inevitable impurities, preferably.

Further, the cross-sectional area of the upper part of the space is preferably larger than the sum of the cross-sectional areas of the plurality of pipes.

In addition, the present disclosure includes a manufacturing apparatus of a WC-based cemented carbide member. The manufacturing apparatus includes a head unit for irradiating a heat source beam to a mixed powder; and a mixed powder feeding unit for feeding the mixed powder. The average composition of the components constituting the mixed powder includes in terms of mass %, Co of 10 % to 40 %; and Cu of 5 % to 15 %, the balance consisting of at least one selected from the group consisting of Ti, Zr and Cr, and W, B, C and inevitable impurities, preferably.

Further, the head unit preferably includes a mixed powder feeding unit. The manufacturing apparatus of the WC-based cemented carbide member is configured so that the mixed powder flows out to the outside of the heat source beam.

Further, it is preferable to further include a mixing unit having a truncated cone shape for mixing a plurality of kinds of powders that are pumped together with a carrier gas to obtain the mixed powder, preferably.

**Advantageous Effects of Invention**

According to the present disclosure, it is possible to provide a WC-based cemented carbide having a high abrasion resistance while adopting a configuration advantageous for a high thermal conductivity.

**Brief Description of Drawings**

Figure 1 is a perspective view showing an example of a main part of an apparatus for mixing powders used for manufacturing a WC-based cemented carbide.
Figure 2 is an overall configuration diagram showing an example of a manufacturing apparatus of a WC-based cemented carbide member.
Figure 3 is a side view showing an example of a WC-based cemented carbide member.

Figure 4 is a diagram showing a result of an elemental mapping analysis and a backscattered electron image by an EPMA of a test piece No. 1 of an Example.

Figure 5 is a diagram showing a result of the elemental mapping analysis and the backscattered electron image by the EPMA of a test piece No. 2 of the Example.

Figure 6 is a diagram showing a result of the elemental mapping analysis and the backscattered electron image by the EPMA of a test piece No. 3 of the Example.

Figure 7 is a graph showing a relation between a shear fracture energy and a concentration of Cu.

**Description of Embodiments**

The present disclosure relates to a WC-based cemented carbide to which a boride is added, a mixed powder for manufacturing the WC-based cemented carbide, a WC-based cemented carbide member, a manufacturing method of the WC-based cemented carbide member, a manufacturing apparatus of a mixed powder for manufacturing the WC-based cemented carbide, and a manufacturing apparatus of a WC-based cemented carbide member.

Hereinafter, embodiments of the present disclosure will be described in detail with reference to the drawings. In the present specification, the numerical range indicated by "to" includes the numerical values before and after it as "more than or equal to" and "less than or equal to". In addition, in the case where "more than" or "less than" is attached to the numerical value, the numerical value is not included. In the drawings, the same or similar parts are denoted by the same reference numerals, and the description thereof will not be repeated.

(WC-based cemented carbide)

One of the characteristics of a WC-based cemented carbide according to an embodiment of the present disclosure is that it contains in terms of mass %, Co of 10 % to 40 %; and Cu of 5 % to 15 %, the balance consisting of at least one selected from the group consisting of Ti, Zr and Cr, and W, B, C and inevitable impurities.

[Co: 10 mass % to 40 mass %]

Co constitutes a metallic bonding phase. Therefore, a toughness of the WC-based cemented carbide member is improved by increasing the content of Co. For example, in a WC-based cemented carbide used for manufacturing a WC-based cemented carbide member, the reduction in the hardness of the WC-based cemented carbide can be prevented by setting the content of the metallic bonding phase to 10 % or more and 40 % or less in terms of mass %. In addition to Co, a Fe or a Cr may be added to prevent the reduction in the hardness.

[Cu: 5 mass % to 15 mass %]

Cu is dispersed in the metallic bonding phase and serves to increase a thermal conductivity of the WC-based cemented carbide member. The WC-based cemented carbide member containing Cu can increase the thermal conductivity. Further, in order to increase the thermal conductivity, Al or the like may be added in addition to Cu.

In addition, B forms a boride of W or Ti. All of these borides contribute to the improvement of the hardness and the thermal conductivity. On the other hand, the borides of W and Ti have the lower toughness than carbides. Therefore, if it is added excessively, the toughness is lowered. Since the content of B (boron) is present in the form of a $TiB_2$, it is appropriate to set the content of B to about twice of the content of Ti, and it is preferable that the content of B is 1.5 times or more and 3 times or less of the content of Ti in terms of molar ratio. On the other hand, if $TiB_2$ is too large, it is likely to be brittle, and therefore, the ratio of $TiB_2$ is more preferably 5 to 20 mass % of the total. The content of boron contained in $TiB_2$ is about 1.6 to 6.0 mass %. Further, it is appropriate that the content of C is around 1 times the W, in order to be present in the form of WC, and it is preferable to be 0.5 times or more and 2 times or less of the content of W in terms of molar ratio.

[Structure of WC-based cemented carbide]

The WC-based cemented carbide has a composite material structure in which particles of hard WC (tungsten carbide), which is a carbide of W (tungsten) and C (carbon), are bound together by a metallic bonding phase. The larger WC content of the cemented carbide member, the higher the hardness. For example, it is preferable that the WC-based cemented carbide contains 40 mass % or more of WC.

In addition, in the WC-based cemented carbide of the present embodiment, it is possible to allow the inclusion of elements, such as Na, Mg, Al, Si, P, S, Ca, Ti, Mn, Ni, Zn, Ga, As, Se, Br, Cd, Sn, Sb, Te etc., the elements being introduced depending on raw materials, supplies, manufacturing facilities, etc., in addition to the above-described elements. The content of these elements is preferably smaller, and is acceptable if the sum thereof is 200 ppm or less. In addition to these elements, O, N, and Ar may be mixed. The contents of the mixed O, N and Ar are, in terms of mass %, as follows: The content of O is 0.5 % or less, the content of N is 0.5 % or less, and the content of Ar is preferably 0.5 % or less.

Although the above elements may be mixed within an acceptable limit, they may not be avoided depending on factors, and are included in inevitable impurities.

In the WC-based cemented carbide, it is desirable that the contents of the constituent elements other than Co and Cu described above are the content described in the following alloy composition I or alloy composition II. In particular, the alloy composition I can be selected when the thermal conductivity is preferred, and the alloy composition II can be selected when the hardness is preferred.

<Alloy composition I>

[Ti: more than 0 mass % and less than 15 mass %]

When the WC-based cemented carbide contains Ti, the hardness increases because a thermodynamically stable TiC is formed. And WC is dissolved in TiC to form a (W, Ti)C solid solution carbide ($\beta$ phase), the oxidation resistance is improved.

TiC has a rock-salt structure and has both strength and toughness as a structure. TiC has a non-stoichiometric composition and retains a stable crystalline structure over a wide composition range. Further, since a specific gravity is small in proportion to the strength, it contributes to the improvement of a specific strength. On the other hand, carbides of Ti have a lower thermal conductivity than carbides of W. Therefore, the thermal conductivity is lowered when it is added excessively. Therefore, Ti is preferably more than 0 mass % and less than 15 mass %, more preferably 3.4 mass % to 14 mass %.

[Zr: more than 0 mass % and 17.0 mass % or less]

When Zr is added to the WC-based cemented carbide, only a small amount of it is dissolved in Co, which contributes to the improvement of a high temperature strength. Further, the thermal conductivity can be expected to be improved by Zr dispersed in the form of $ZrB_2$ in the WC-based cemented carbide.

On the other hand, Zr is strongly connected to oxygen. As a result, $ZrO_2$ is easily generated. This results in a reduction in the toughness. Therefore, Zr is preferably more than 0 mass % and 17.0 mass % or less, more preferably 4.0 mass % to 17.0 mass %.

[Cr: more than 0 mass % and 15.0 mass % or less]

When Cr is added to the WC-based cemented carbide, most of Cr are dissolved in the bonding phase, which contributes to the improvement of the corrosion resistance and the oxidation resistance. In addition, when a rapid solidification is performed, such as in an additive manufacturing, a larger amount of Cr dissolves in Co. Further, when such rapid solidification is performed, since the particle size of the carbides and borides dispersed in the WC-based cemented carbide is finer, a transverse rupture strength from low temperature to high temperature is increased, it is possible to suppress the decrease in the strength.

On the other hand, Cr has the lower thermal conductivity than the carbides and Co of W. Therefore, a decrease in the thermal conductivity occurs when it is excessively mixed. Therefore, Cr is preferably more than 0 mass % and 15.0 mass % or less, more preferably 3.5 mass % to 14.5 mass %.

[B: more than 0 mass % and less than 6.0 mass %]

B forms a boride of W or Ti. All of these borides contribute to the improvement of the hardness and the thermal conductivity. On the other hand, the borides of W and Ti have the lower toughness than carbides. Therefore, if it is added excessively, the toughness is lowered. Therefore, B is preferably more than 0 mass % less than 6.0 mass %, more preferably 1.6 mass % to 6.0 mass %.

[W: more than 23 mass % and 75.5 mass % or less]

W forms a carbide or a boride. WC has both the hardness and the toughness. In addition, WC is characterized by its high Young's modulus, and when it is used for a structural material, it is difficult to flex. Since WB has the same properties as WC, a member using them as a base material is suitable for a jig tool such as a mold or a cutting tool.

Therefore, W is preferably more than 23 mass % and 75.5 mass % or less, more preferably 42 mass % to 57 mass %.

[C: more than 1.5 mass % and 5 mass % or less]

C is an element forming a carbide. There is an appropriate amount of C in each composition. When C is small, an embrittlement layer such as η phase occurs. It leads to the formation of free carbon if C is mixed in excess. Each of them is likely to be a starting point of fracture of the member, and it is preferable to suppress them. Therefore, C is preferably more than 1.5 mass % and 5 mass % or less, it is more preferably 2.7 mass % to 3.7 mass %.

<Alloy Compositional II>

The alloy composition II aims to improve the hardness and the specific strength as compared with the alloy composition I. The effect of each element is as described above.

[Ti: 15 mass % or more and 35 mass % or less]

In terms of hardness and specific strength, the content of TiC is higher than that of the alloy composition I. Therefore, Ti is set to 15 mass % to 35 mass %.

[B: 6.0 mass % or more and 16 mass % or less]

B forms a boride of W or Ti. All of these borides contribute to the improvement of the hardness and the thermal conductivity. On the other hand, the borides of W and Ti have the lower toughness than carbides. Therefore, if it is added excessively, the toughness is lowered. From the viewpoint of the hardness and the specific strength, the content is increased as compared with the alloy composition I. Therefore, B is 6.0 mass % to 16 mass %.

[W: more than 0 mass % and 61.5 mass % or less]

W has a property that it has both the hardness and the toughness by forming WC and WB, W is more than 0 mass % and 61.5 mass % or less.

[C: more than 0 mass % and 4 mass % or less]

A WC-Co cemented carbide has two phases of a WC+Co bonded phase if the amount of an alloyed carbon is equal to or near the amount of bonded carbon in WC. However, when it is slightly increased, the phase becomes three phases to which a free carbon (C) is added, and when it is slightly decreased, the phase becomes three phases to which a η phase ($Co_3W_3C$) is added. These phases are referred to as detrimental phases and reduce mechanical properties. Therefore, C is more than 0 mass % and 4 mass % or less.

In addition, the above-described amounts of elements can be analyzed, for example, by ICP-OES or ICP-MS. And it can be quantitatively analyzed by a surface analysis method such as XRF, EPMA and EDX.

[Alloy structure]

The WC-based cemented carbide of the present embodiment has a first phase including Ti, W and C, a second phase including W, B and Co, and a third phase including Co. The first, second and third phases can be evaluated using, for example, an electronic probe microanalyzer (Electron Probe Micro Analyzer: EPMA).

The first phase may also be referred to as a hard phase (also referred to as a "WTiC phase") containing Ti, W and C. The second phase may also be referred to a hard phase (also referred to as a "WBCo phase") containing W, B and Co. The third phase may also be referred to as a metallic phase which is composed of a metallic phase (Co rich phase) in which the content of Co is the highest in terms of mass %. In addition, in the first phase, the upper three elements having a large content are Ti, W and C.

In the case of the alloy composition I, the area ratio of the first phase is preferably more than 0 % and 50 % or less. In the alloying II, the area ratio of the first phase is preferably 30 % or more and 60 % or less.

[Area ratio]

The area ratio referred to in this specification may be calculated by observing a cross section of the alloy and calculating the area ratio in an observed area from an image processing based on an element mapping using an EPMA etc. For example, a phase in which W, Ti and C are concentrated and detected may be used as the first phase, a phase in which W, B and Co are concentrated and detected may be used as the second phase, and a phase in which mainly Co is detected may be used as the third phase, and an area ratio may be calculated.

When an EPMA (for example, EPMA-1610, manufactured by Shimadzu Corporation) is used, an observation may carry out in an observation condition, for example, an acceleration voltage: 15 kV, an irradiation current: 100 nA, a data point is X: 400, Y: 400, a step size is X: 0.300 um, Y: 0.300 um, a beam diameter is 1 um, and a counting time is 20 msec.

(WC-based cemented carbide powder)

As a WC-based cemented carbide powder, a powder can be used that is an aggregate of grains having the above-described WC-based cemented carbide, that is, an alloy powder that has been alloyed in advance. A method for manufacturing the alloy powder that has been alloyed in advance is a refining method in which alloy granulated powder is passed through a high-temperature region such as plasma, it is desirable to improve a flowability by increasing a sphericity by a thermal plasma droplet smelting. In addition to the granulated powder, a powder produced by a gas atomization method or a water atomization method may be used. For example, the flowability of the powder (measured according to JIS Z2502) is desirably 10 to 40 sec/50g, more desirably 10 to 30 sec/50g, and even more desirably 10 to 25 sec/50g in order to increase a shaping accuracy.

It is also possible to use a WC-Co powder containing WC and Co, a WC powder, a Cu powder, and at least one boride powder selected from the group consisting of $WB_4$, $TiB_2$, $ZrB_2$ and $CrB_2$. As the WC-Co powder, a WC-Co powder having a Co ratio of 10 to 40 % can be used. In addition, only WC powder and Co powder may be used, and the W powder, Co powder and the C powder may be added respectively. Furthermore, the WC powder or Co powder can be used after using the WC-Co powder.

Further, for example, as a powder for a WC-based cemented carbide, W, Co, Cu, Ti, B and C powder may be mixed so as to have a desired compositional range. Alternatively, the powder of the remaining element may be mixed with an alloy powder containing two or more of the above elements in advance. Of course, the alloy powders containing two or more of the above elements may be mixed in advance.

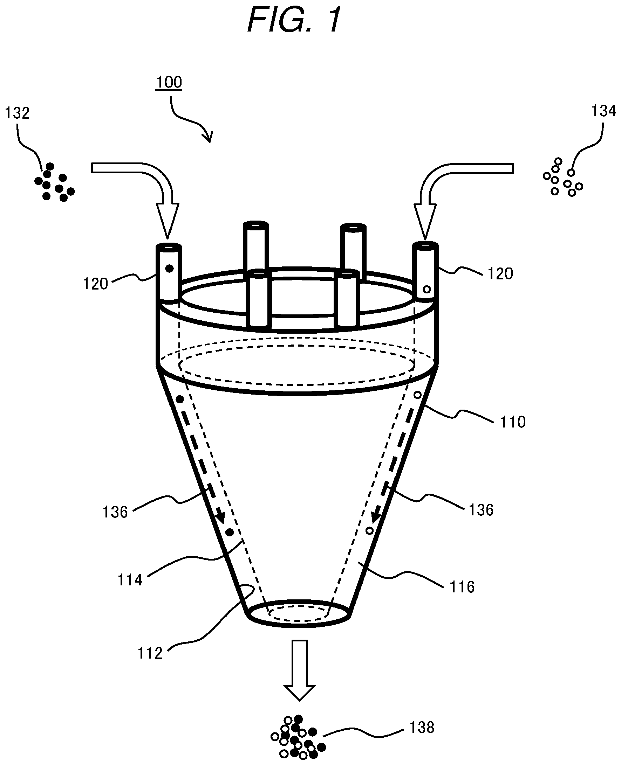

Figure 1 is a perspective view showing an example of a main part of an apparatus for mixing powders used for manufacturing a WC-based cemented carbide.

In this figure, a mixed powder manufacturing apparatus 100 (a manufacturing apparatus of mixed powder) has a configuration in which a plurality of pipes 120 are connected to a mixing unit 110 having a truncated cone shape. In the mixing unit 110, a diameter of an upper bottom surface is larger than the diameter of a lower bottom surface. The mixing unit 110 includes a large diameter part 112 (outer wall part) that is visually recognized as an inclined surface part of the truncated cone, and a small diameter part 114 (insertion part) that corresponds to an inclined surface part of the truncated cone inserted inside the large diameter part 112. A space 116 formed between the large diameter part 112 and the small diameter part 114 is a flow path of the powders 132, 134 fed from the pipe 120. The pipe 120 is connected to an outer edge part of an upper bottom surface of the mixing unit 110. The powders 132, 134 are raw materials of a WC-based cemented carbide.

The plurality of kinds of powders 132, 134 flow into the space 116 together with a carrier gas via different pipes 120, and are mixed in the process of passing through the space 116 as indicated by a dashed arrow 136, and flow out from the lower part of the space 116. Note that the arrow 136 is simply shown downward, but the actual powder 132, 134 flows downward while swirling through the space 116. Therefore, a plurality of kinds of powders 132, 134 are naturally mixed to form a mixed powder 138. The mixed powder 138 flows out from the lower part of the mixing unit 110. The carrier gas is preferably an inert gas or a compressed air.

A method of manufacturing the mixed powder 138 using the mixed powder manufacturing apparatus 100 shown in the figure includes the following steps.

The plurality of kinds of powders 132, 134 are individually pumped to the space 116 together with the carrier gas via the pipe 120 (first step). The plurality of pumped powders 132, 134 and the carrier gas are jetted into the space 116 and mixed to obtain a mixed powder 138 (second step). Here, the cross-sectional area of the upper part of the space 116 is larger than the sum of the cross-sectional areas of the plurality of pipes 120.

The mixed powder 138 is discharged from a discharge port provided in a lower part of the space 116 (third step).

The first step and the second step, or the first step, the second step and the third step may be collectively referred to as a "powder mixing step".

The kinds of the powders 132, 134 are not particularly limited. The particle size of the powders 132, 134 is preferably about 0.1 to 300 um in mean particle size (D50). For example, in a metal deposition method, a mean particle diameter (D50) is preferably 30 to 250 $\mu$m, more preferably about 60 um to 150 um in a cumulative particle size distribution curve based on volume determined by a laser diffractometry method.

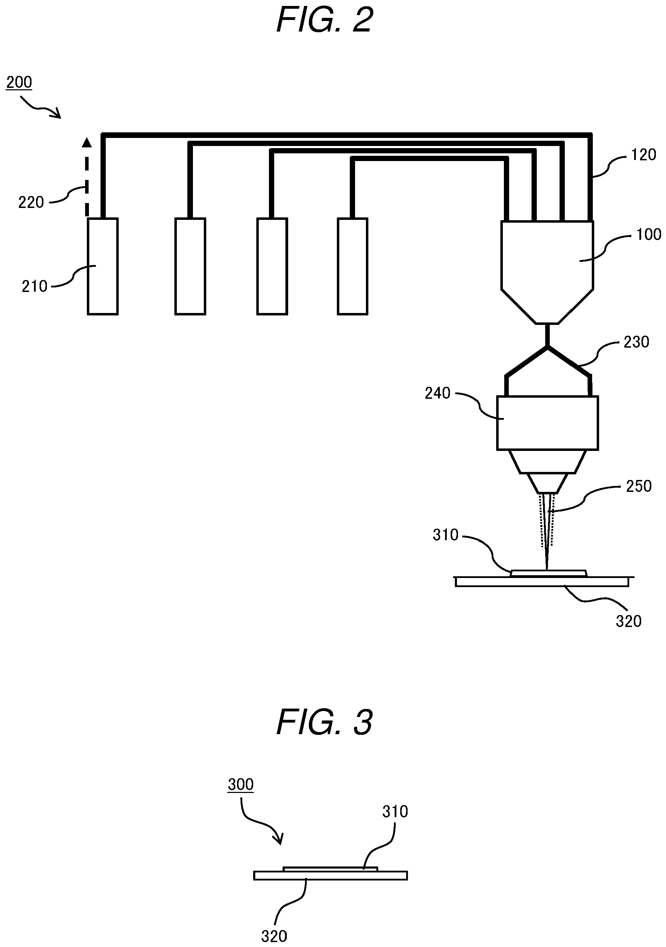

Figure 2 is an overall configuration diagram showing an example of a manufacturing apparatus of a WC-based cemented carbide member.

In this figure, an additive manufacturing apparatus 200 (a manufacturing apparatus of a WC-based cemented carbide member includes a mixed powder manufacturing apparatus 100 (a mixed powder manufacturing unit), a plurality of powder feeding units 210, and a head unit 240. The mixed powder manufacturing apparatus 100 and the powder feeding units 210 are connected by a pipe 120 (a powder feed path). Further, the mixed powder manufacturing apparatus 100 and the head unit 240 are connected by a pipe 230 (a mixed powder feed path).

From each of the powder feeding units 210, a powder as a component of the mixed powder is pumped by a carrier gas 220 (indicated by a broken arrow in the drawing).

In the mixed powder manufacturing apparatus 100, a plurality of kinds of powders sent from the respective powder feeding units 210 are mixed as shown in Figure 1, and become a mixed powder.

The head unit 240 irradiates a substrate 320 with a heat source beam 250 and supplies the mixed powder sent to the head unit 240 via the pipe 230. In the figure, the mixed powder is indicated by a dotted line outside the heat source beam 250. The heat source beam 250 is a laser, an electron beam, a plasma, an arc, or the like. In particular, the laser is preferred because the irradiation spot can be relatively small and can be applied under atmospheric pressure.

The mixed powder is heated and melted by the heat source beam 250 on the surface of the substrate 320, and laminated to form a cemented carbide portion 310.

Note that when the cemented carbide portion 310 is formed, a part of the substrate 320 may also be heated and melted by the heat source beam 250. In this case, the cemented carbide portion 310 includes a substance in which the mixed powder and the components of the substrate 320 are mixed. Even in such a case, if the cemented carbide portion 310 is laminated to a predetermined thickness or more by further feeding the mixed powder, the portion becomes a region where the components of the substrate 320 do not dissolve. By forming the cemented carbide portion 310 in this manner, the exposed portion of the cemented carbide portion 310 can be formed of a cemented carbide having a desired hardness and thermal conductivity.

(WC-based cemented carbide materials)

As described above, an example of the WC-based cemented carbide member includes a substrate and a cemented carbide portion formed on the surface of the substrate. The cemented carbide portion is formed of a WC-based cemented carbide, and includes, in terms of mass %, Co of 10 % or more and 40 % or less, and Cu of 5 % or more and 15 % or less, the balance consisting of at least one selected from the group consisting of Ti, Zr and Cr, and W, B, C and inevitable impurities. The cemented carbide portion may be formed in the form of a film.

Figure 3 shows an example of a WC-based cemented carbide member.

In this drawing, a WC-based cemented carbide member 300 has a configuration in which a part of a substrate 320 is covered with a cemented carbide portion 310.

In addition, the WC-based cemented carbide member may be a member in which the cemented carbide portion is separated from the member integrated with the substrate as described above. The method of separation is not particularly limited. Here, the WC-based cemented carbide member does not include a substrate and is made of only WC-based cemented carbide.

[Hardness]

The hardness of the cemented carbide member is, for example, 45 HRC or higher in terms of Rockwell hardness, preferably 50 HRC or higher, more preferably 60 HRC or higher, and particularly preferably 70 HRC or higher.

[Method for measuring hardness]

A Rockwell hardness test method can be used as a method for measuring hardness.

A test piece can be obtained by cutting the cemented carbide portion, and grinding the cut surface to a mirror surface using an emery paper and diamond abrasive grains. Then, at room temperature, an initial load of 10 kgf is applied for 2 seconds using a Rockwell hardness tester. Thereafter, the hardness is measured at the load of 60 kgf and a holding time of 4 seconds. The measurement is performed three times, and the average value of three times is taken as the hardness.

[Thermal conductivity]

The thermal conductivity is 10 W/(m-K) or more, preferably 20 W/(m-K) or more, more preferably 30 W/(m-K) or more, particularly preferably 40 W/(m·K) or more.

[Method for measuring thermal conductivity]

As a method of measuring the thermal conductivity of an alloy member, a thermal diffusivity $\alpha$, a density $\rho$, and a specific heat c are measured, and the thermal conductivity $\lambda$ can be obtained from the following equation (1).

$$\lambda = \alpha \cdot \rho \cdot c \quad \ldots (1)$$

The thermal diffusivity can be measured using a Xe flash thermal diffusivity measuring device (Model: Nanoflash LFA447 NETZSCH, manufactured by Bruker-axs). For example, a sample (test piece) used for measuring the thermal diffusivity may be sized 9.5 mm $\times$ 9.5 mm $\times$ 1.5 mm, and a sample may be used which is obtained by polishing to #600 with a water-resistant Emily paper, applying graphite fine powder by spraying, and thereby performing a blackening treatment.
The specific heat can be measured, for example, using a differential scanning calorimetry (DSC).

[Evaluation of abrasion resistance]

An abrasion resistance can be evaluated by a friction wear tester. Examples thereof include a ball-on-disk, a pin-on-disk, a block-on-ring, and a reciprocating sliding test.
In these abrasion resistance evaluation tests, a lathe can also be used. When the lathe is used, an abrasion resistance evaluation test of a test piece can be evaluated by using a rotational force of the lathe, bringing a rotating steel piece into contact with the test piece, sliding them, and measuring a wear depth when the rotating steel piece is slid by a certain number. At this time, the steel piece may be rotated eccentrically with respect to the rotation axis of the lathe.

<Application>

The WC-based cemented carbide and the WC-based cemented carbide member of the present embodiment have both high thermal conductivity and high abrasion resistance. Therefore, they can be applied to, for example, a jig tool such as a cutting tool or a mold, a bearing, a guide of a sliding surface, and a wear-resistant member such as a gear. In particular, when they are applied to a hot stamping die for forming an ultra high tensile steel, an advantage that a cooling-time is shortened due to an improvement of the thermal conductivity of the die is large, which is optimum in order to contribute to an improvement of productivity.

(Method for manufacturing WC-based cemented carbide member)

As a method of manufacturing a WC-based cemented carbide member, there is an additive manufacturing method. An explanation can be made by using Figure 2 as follows: In the following description, processes other than a preheating process may be collectively referred to as "additive manufacturing process".
As shown in this figure, the substrate 320 is prepared and preheated as necessary (preheating step).
Next, powder to be a raw material is fed from the powder feeding unit 210 to the mixed powder manufacturing apparatus 100 (raw material powder feeding step). The fed powder is mixed in the mixed powder manufacturing apparatus 100 to prepare a mixed powder (mixed powder preparation step).
Then, the heat source beam 250 is irradiated from the head unit 240 toward the substrate 320, and the mixed powder sent to the head unit 240 via the pipe 230 is fed (mixed powder feeding step). The mixed powder melts at the surface of the substrate 320, and then the melted portion solidifies (melting and solidifying step) by adjusting the irradiation energy amount of the heat source beam 250 or moving the head unit 240.
A cemented carbide member (reference numeral 310) having a desired shape can be manufactured by repeating the mixed powder feeding step and the melting and solidifying step.
In addition, a method may be adopted that is melting the mixed powder by arranging the mixed powder on a surface of the substrate 320 etc. in advance, irradiating the mixed powder with the heat source beam 250 and then solidifying it. Further, the mixed powder may be fed from a discharge unit (mixed powder feeding unit) provided separately from the head unit 240 that irradiates the heat source beam 250. In this case, the step of feeding the mixed powder from the discharge unit may be referred to as a "mixed powder feeding step" separately from the step of irradiating the heat source beam 250.
The mixed powder is obtained by mixing a plurality of kinds of raw material powders, but in order to manufacture the WC-based cemented carbide member according to the present disclosure, the composition of the components constituting the mixed powder, in terms of mass %, Co of 10 % or more and 40 % or less, and Cu of 5 % or more and 15 % or less, the balance, W, B, C and at least one selected from the group consisting of Ti, Zr and Cr and the inevitable impurities. The mixed powder is also referred to as "mixed powder for manufacturing WC-based cemented carbide".

When the substrate 320 is an unnecessary member, the cemented carbide portion 310 is cut out and separated from the substrate 320, thereby manufacturing a member made of only WC-based cemented carbide.

The raw material powder feeding step and the mixed powder preparation step may be performed in advance to prepare an appropriate mixed powder. By preparing the mixed powder in this manner, the time required to manufacture the cemented carbide portion 310 can be shortened.

The above is an exemplary method for additive manufacturing the entire shaped product using the WC-based cemented carbide powder.

The step of repeating the mixed powder feeding step and the melting and solidifying step may be referred to as a shaped product lamination forming step.

Because a molding is carried out by instantaneous and localized melting and solidification local melting and solidification in the additive manufacturing method described above, as compared with the conventional liquid phase sintering method, it is possible to suppress a deformation due to its own mass at the time of additive manufacturing. Therefore, it is preferable.

The additive manufacturing method according to the present disclosure is not limited to the method using the heat source beam as described above, and for example, a directed energy deposition method such as a laser metal deposition, a powder bed fusion method, plasma powder welding, etc. may be used.

According to the additive manufacturing method described above, it is possible to perform an additive manufacturing while accurately and quickly mixing a plurality of kinds of powders at a desired mixing ratio.

The preheating step is a step of preheating the substrate to a temperature of 350 °C or higher, and is performed as necessary. The preheating can be performed using, for example, a highfrequency induction heating, a gas burner, an infrared electric heater, a heating furnace, irradiation with an electron beam or a laser, etc. In the preheating step, it is more preferable to preheat the substrate to a temperature of 500 °C or higher, and it is particularly preferable to preheat the substrate to a temperature of 700 °C or higher. In the preheating step, from the viewpoint of preventing deformation due to its own mass, the temperature of the substrate is preferably 1300 °C or lower, more preferably 1000 °C or lower.

In the preheating step, preheating the substrate to a temperature of 350 °C or higher cracks between the WC-based cemented carbide shaped body and the substrate, occurrence of separation, occurrence of minute cracks in the shaping portion (cemented carbide portion 310), etc. can be suppressed in the subsequent additive manufacturing process. Specifically, by preheating the substrate to a certain temperature or higher in the preheating step, a temperature gradient of the WC-based cemented carbide shaped body and the substrate at the time of the additive manufacturing becomes gradual in the additive manufacturing process, and the suppression of the deformation due to the thermal stress and the relaxation of the residual stress are enabled. Further, by preheating the substrate to a temperature of 500 °C or higher in the preheating step, the thermal stress is further relaxed, it is possible to further suppress the occurrence of cracks, separation and the like in the additive manufacturing process.

Further, the obtained WC-based cemented carbide member may be subjected to a heat treatment. For example, the heat treatment is preferably performed at 1200 °C or higher for about 0.5 to 10 hours. When the temperature is 1300 °C or higher, the heat treatment is preferably performed in an inert gas atmosphere or in a vacuum. Further, when the temperature is 1200 °C or higher, the heat treatment is preferable by using a pressure treatment, for example, a hot isostatic pressing (HIP).

By performing the heat treatment, C can be dissolved in W, Ti and Co contained in the WC-based cemented carbide member, and free carbon can be suppressed. Thus, an improvement in the specific strength can also be expected. An aging treatment at 600 °C to 900 °C for 1 to 24 hours may also be performed. Of course, the WC-based cemented carbide may be subjected to the heat treatment described above.

Hereinafter, the present disclosure will be described in more detail with reference to Examples. The present disclosure is not limited to these examples.

**Examples**

[Preparation of WC-based cemented carbide member (No. 1 to 3)]

The raw material powder was mixed and melt-solidified to prepare a WC-based cemented carbide piece member.

As the raw material powder, WC-Co powder, WC powder and $TiB_2$ powder manufactured by Japan New Metals Co., Ltd., and Cu powder manufactured by Hikari Material Industry Co., Ltd. were used.

Table 1 shows a ratio of the raw material powder used in preparing a WC-based cemented carbide member (test piece). The unit of numbers in the table is dimensionless.

Table 2 shows a composition of the manufactured WC-based cemented carbide member (test piece). The unit of numbers in the table is percentages by mass.

[Table 1]

Table 1

| No. | WC-40Co | WC | Cu | TiB$_2$ |
|-----|---------|------|------|------|
| 1 | 0.75 | 0.15 | 0.05 | 0.05 |
| 2 | 0.75 | 0.1 | 0.05 | 0.1 |
| 3 | 0.75 | 0 | 0.05 | 0.2 |

[Table 2]

Table 2

| | | | | | | | Unit: mass % |
|-----|------------------|-------|------|-------|------|-------|------|
| No. | Alloy Composition | W | C | Co | Cu | Ti | B |
| 1 | I | 56.32 | 3.68 | 30.00 | 5.00 | 3.44 | 1.56 |
| 2 | I | 51.63 | 3.37 | 30.00 | 5.00 | 8.16 | 1.84 |
| 3 | I | 42.24 | 2.76 | 30.00 | 5.00 | 13.78 | 6.22 |

[Additive Manufacturing Conditions]

As an additive manufacturing method, a directed energy deposition method was used. the modeling conditions were output 1800 W and scan rate 800 mm/min. As the substrate, YAG300 (manufactured by Hitachi Metals, Ltd., registered trademark of Hitachi Metals, Ltd. for YAG) was used.

The test pieces No. 1 to 3 of the Examples shown in Table 1 and Table 2 were analyzed for structure using an EPMA. All test pieces No. 1 to 3 correspond to Alloy Composition I.

For all of the test pieces, the analysis conditions are as follows.

- Device name: EPMA-1610 (Shimadzu Corporation)
- Acceleration Voltage: 15 kV
- Illumination current: 100 nA
- Data point (X: 400, Y: 400)
- Beam diameter: 1 um
- Counting hours: 20 msec

[Results]

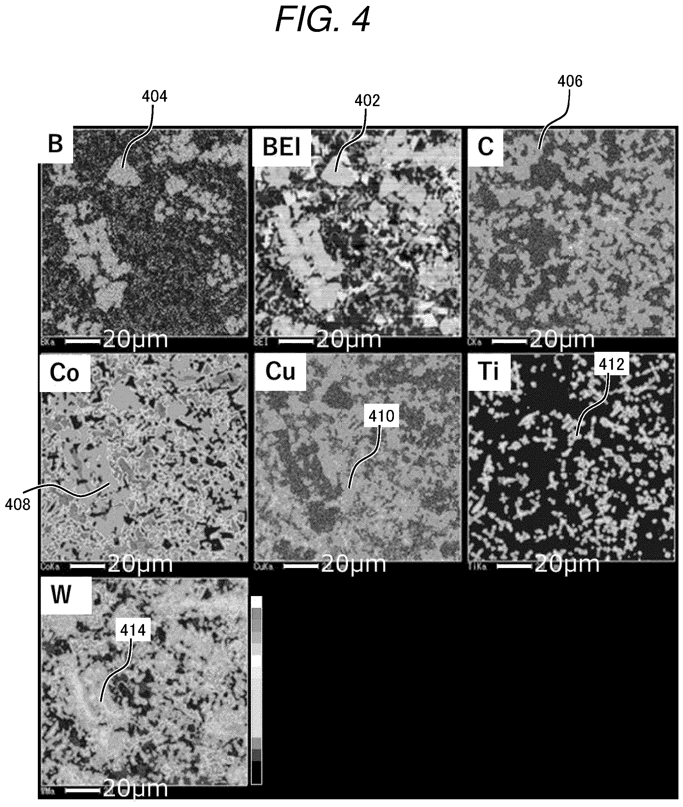

Figure 4 to Figure 6 show results of elemental mapping analyses and backscattered electron images by the EPMA. In the figures showing the results of the elemental mapping analyses by the EPMA, areas where the element concentration is relatively high are shown in color, and areas where the element concentration is relatively low are shown in black, the elements being observed in the same field of view.

Figure 4 is a diagram showing a result of an elemental mapping analysis and a backscattered electron image by an EPMA of a test piece No. 1 of an Example.

In this figure, distributions of boron 404 (B), carbon 406 (C), cobalt 408 (Co), copper 410 (Cu), titanium 412 (Ti) and tungsten 414 (W) are shown together with the backscattered electron image 402 (BEI). Here, the color bars shown in the lower left (lateral to W) of Figures 4 to 6 indicate that the concentration of the elements observed in the same field of view is relatively high toward the upper side of the bar.

As shown in Figure 4, in the test piece No. 1, the portions where W, Ti and C are distributed have many overlapping portions, those overlapping portions are considered to constitute the first phase (WTiC phase). It is considered that the presence of the first phase contributes to improvements in the hardness and the oxidation resistance. It is also considered that the portions where B, Co and W are distributed overlap, and that B, Co and W form a compound and are distributed in lumps, i.e., B, Co and W form the second phase (WBCo phase). In addition, as the result of the elemental mapping analysis of Co shows a portion that the colored state is deep and Co content is high, that is, the third phase (Co rich phase) is formed at the portion. Also, it is found that Cu is more distributed in portions where B has a low concentration. It is considered that Cu contributes to the improvement of the thermal conductivity. Further, though there are portions in which C is distributed at portions that does not overlap with any distribution of W, Ti and Co, it is considered that there is C (also referred to as free carbon) that is not dissolved in solid. As for the free carbon, for example, by performing a heat treatment at 1250 °C for 5 hours, C can be dissolved in W, Ti or Co, and the free carbon can be suppressed. Thereby, it can be expected to improve the specific strength of the member.

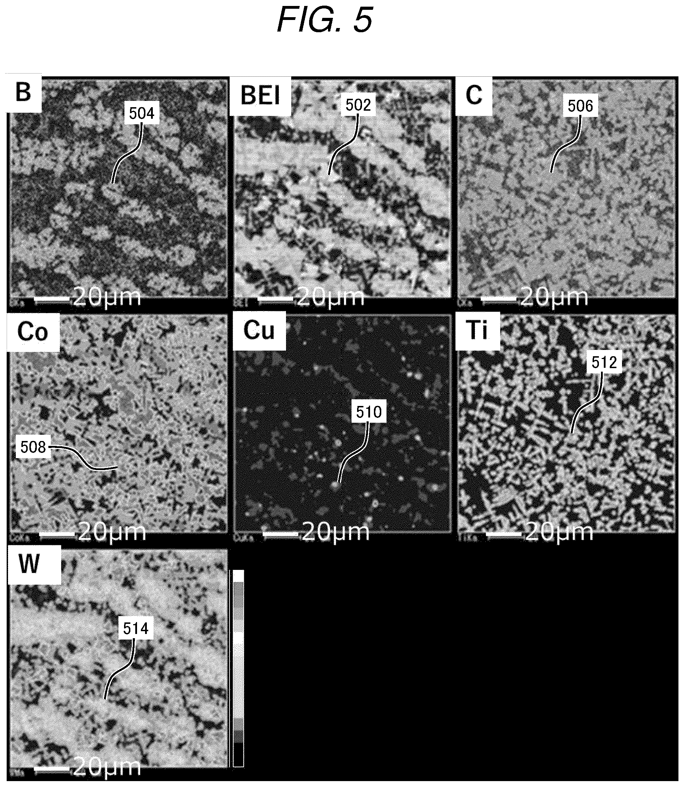

Figure 5 is a diagram showing a result of the elemental mapping analysis and the backscattered electron image by the EPMA of a test piece No. 2 of the Example.

In this figure, distributions of boron 504 (B), carbon 506 (C), cobalt 508 (Co), copper 510 (Cu), titanium 512 (Ti) and tungsten 514 (W) are shown together with the backscattered electron image 502 (BEI).

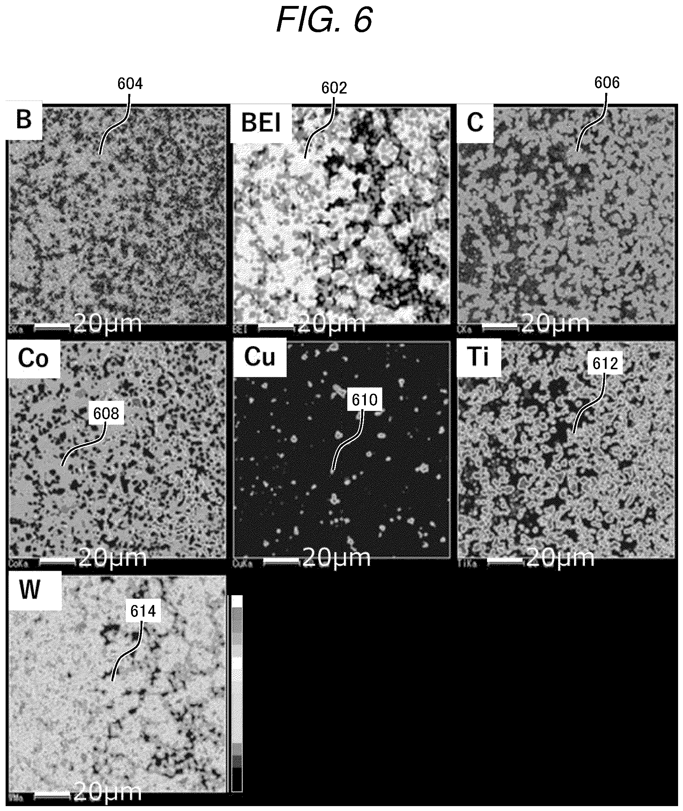

Figure 6 is a diagram showing a result of the elemental mapping analysis and the backscattered electron image by the EPMA of a test piece No. 3 of the Example.

In this figure, distributions of boron 604 (B), carbon 606 (C), cobalt 608 (Co), copper 610 (Cu), titanium 612 (Ti) and tungsten 614 (W) are shown together with the backscattered electron image 602 (BEI).

For Figures 5 and 6, as in Figure 4, the portions where W, Ti and C are distributed have many overlapping portions, those overlapping portions are considered to constitute the first phase (WTiC phase). It is considered that the presence of the first phase contributes to improvements in the hardness and the oxidation resistance. It is also considered that the portions where B, Co and W are distributed overlap, and that B, Co and W form a compound and are distributed in lumps, i.e., B, Co and W form the second phase (WBCo phase). In addition, as the result of the elemental mapping analysis of Co shows a portion that the colored state is deep and Co content is high, that is, the third phase (Co rich phase) is formed at the portion. Also, it is found that Cu is more distributed in portions where B has a low concentration. It is considered that Cu contributes to the improvement of the thermal conductivity. Further, though there are portions in which C is distributed at portions that does not overlap with any distribution of W, Ti and Co, it is considered that there is C (also referred to as free carbon) that is not dissolved in solid. As for the free carbon, for example, by performing a heat treatment at 1250 °C for 5 hours, C can be dissolved in W, Ti or Co, and the free carbon can be suppressed. Thereby, it can be expected to improve the specific strength of the member.

Table 3 shows the mean area ratio of the first phase for each of the test pieces No. 1 to 3.

As shown in the table, the area ratio of the first phase (phase including W, Ti and C) is larger in No. 2 than in No. 1, and in No. 3 than in No. 2. That is, it is confirmed that the larger Ti is included, the larger the area ratio of the first phase is. The average value of the area ratio was calculated on the basis of measuring of three times in a measurement field of 120 $\mu$m $\times$ 120 $\mu$m.

[Table 3]

Table 3

| No. | Average Value (%) |
|-----|-------------------|
| 1   | 21                |
| 2   | 31                |
| 3   | 40                |

Table 4 shows the hardness of each of the test pieces No. 1 to 3 measured using a Rockwell hardness tester.

As shown in the tables, the hardness of No. 2 than that of No. 1, and that of No. 3 is higher than that of No. 2. That is, it can be seen that the more Ti and B are included, the harder is.

[Table 4]

Table 4

| No. | Hardness (HRC) | |
| --- | --- | --- |
| | N number | Average |
| 1 | | 66.3 |
| 2 | 3 | 69.1 |
| 3 | | 72.2 |

Cu that contributes to the improvement of the thermal conductivity will be described below as to how much the abrasion resistance, which is another advantage of the WC-based cemented carbide according to the present disclosure, changes due to the change in the density thereof.

To show this, we applied molecular dynamics simulations described in Non-Patent Literature 1 to the WC-based cemented carbide according to the present disclosure to create a stress-strain curve as shown in Figure 2 of Non-Patent Literature 2. Then, a shear fracture energy was calculated by an area surrounded by the curve of the graph, the horizontal axis, and a straight line drawn from the maximum point on the graph to the horizontal axis, the curve of the graph and the horizontal axis being up to the point where the stress on the vertical axis is maximum.

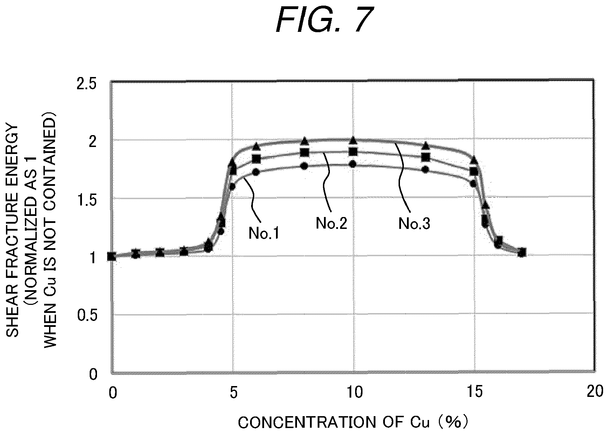

Figure 7 is a graph showing a relation between a shear fracture energy and a concentration of Cu. In the figure, No. 1 is marked with ●, No. 2 is marked with ■, and No. 3 is marked with ▲.

The ratio of other elements contained in the alloy when the Cu concentration is changed is set as the change in the concentration of other elements by proportional distribution of the change in the concentration of Cu based on the composition of each of No. 1 to 3. Also, for each of No. 1 to 3, the shear fracture energy was normalized to 1 when Cu concentration was zero.

From this figure, it can be seen that when the concentration of Cu is 5 % or more and 15 % or less, the shear fracture energy is significantly higher than the concentration of Cu in the range of less than 5 % and the range of more than 15 %, and it is effective that the concentration is within this range. If Cu is less than 5 %, the hardness is higher, but it cannot extend as the shear deformation progresses, and the shear fracture energy is lower due to the brittle fracture. Further, when Cu is more than 15 %, it is easily deformed at lower stresses, and therefore, even if there is an extension, the shear fracture energy is not increased.

From the above, it can be said that the density of Cu should be 5 % or more and 15 % or less.

As described above, according to the present disclosure, it is shown that it is possible to provide a WC-based cemented carbide powder enabling to manufacture a WC-based cemented carbide member having excellent high thermal conductivity and high abrasion resistance, a WC-based cemented carbide member, and a method of manufacturing a WC-based cemented carbide member.

It should be noted that the present disclosure is not limited to the above-described embodiments, and the other embodiments considered within the scope of the technical idea of the present disclosure are also included within the scope of the present disclosure without departing from the spirit of the present disclosure. For example, the configuration and the processing illustrated in the above-described embodiments may be appropriately integrated or separated according to the implementation form and the processing efficiency. Further, for example, some or all of the above-described embodiments and modifications may be combined to the extent that they do not contradict each other.

**Reference Signs List**

100: mixed powder manufacturing apparatus, 110: mixing unit, 112: large diameter part, 114: small diameter part, 116: space, 120, 230: pipe, 132, 134: powder, 138: mixed powder, 200: additive manufacturing apparatus, 210: powder feeding unit, 220: carrier gas, 240: head unit, 250: heat source beam, 300: WC-based cemented carbide member, 310: cemented carbide portion, 320: substrate.

**Claims**

1. A WC-based cemented carbide containing:

in terms of mass %,
Co of 10 % to 40 %; and
Cu of 5 % to 15 %,
the balance consisting of at least one selected from the group consisting of Ti, Zr and Cr, and W, B, C and inevitable impurities.

2. The WC-based cemented carbide according to claim 1,

in terms of molar ratio,
wherein the content of B is 1.5 times to 3 times of the content of Ti, and
the content of C is 0.5 times to 2 times of the content of W.

3. The WC-based cemented carbide according to claim 1 or 2,

in terms of mass %,
wherein the content of Ti is more than 0 % and less than 15 %,
the content of B is more than 0 % and less than 6.0 %,
the content of W is more than 23 % and 75.5 % or less, and
the content of C is more than 1.5 % and 5 % or less.

4. The WC-based cemented carbide according to claim 3, including:

a first phase containing Ti, W and C;
a second phase containing W, B and Co; and
a third phase containing Co,
wherein an area ratio of the first phase in a cross-sectional view is more than 0 % and 50 % or less.

5. A mixed powder for manufacturing a WC-based cemented carbide, the mixed powder being obtained by mixing a plurality of kinds of powders to manufacture the WC-based cemented carbide,
the average composition of the components constituting the mixed powder includes:

in terms of mass %,
Co of 10 % to 40 %; and
Cu of 5 % to 15 %,
the balance consisting of at least one selected from the group consisting of Ti, Zr and Cr, and W, B, C and inevitable impurities.

6. The mixed powder for manufacturing the WC-based cemented carbide according to claim 5,

wherein in the WC-based cemented carbide,
in terms of molar ratio,
the content of B is 1.5 times to 3 times of the content of Ti, and
the content of C is 0.5 times to 2 times of the content of W.

7. The mixed powder for manufacturing the WC-based cemented carbide according to claim 5 or 6,

wherein in the WC-based cemented carbide,
in terms of mass %,
the content of Ti is more than 0 % and less than 15 %,
the content of B is more than 0 % and less than 6.0 %,
the content of W is more than 23 % and 75.5 % or less, and
the content of C is more than 1.5 % and 5 % or less.

8. A WC-based cemented carbide member that is formed of a WC-based cemented carbide,
the WC-based cemented carbide containing:

in terms of mass %,
Co of 10 % to 40 %; and
Cu of 5 % to 15 %,
the balance consisting of at least one selected from the group consisting of Ti, Zr and Cr, and W, B, C and inevitable impurities.

**9.** The WC-based cemented carbide member according to claim 8,

wherein in the WC-based cemented carbide,
in terms of molar ratio,
the content of B is 1.5 times to 3 times of the content of Ti, and
the content of C is 0.5 times to 2 times of the content of W.

**10.** The WC-based cemented carbide member according to claim 8 or 9,

wherein in the WC-based cemented carbide,
in terms of mass %,
the content of Ti is more than 0 % and less than 15 %,
the content of B is more than 0 % and less than 6.0 %,
the content of W is more than 23 % and 75.5 % or less, and
the content of C is more than 1.5 % and 5 % or less.

**11.** The WC-based cemented carbide member according to claim 8 or 9,
having a hardness of 45 HRC or more and a thermal conductivity of 10 W/(m·K) or more.

**12.** A WC-based cemented carbide member comprising:

a substrate; and
a cemented carbide portion formed on a surface of the substrate,
wherein the cemented carbide portion is formed of a WC-based cemented carbide, and
the WC-based cemented carbide contains:

in terms of mass %,
Co of 10 % to 40 %; and
Cu of 5 % to 15 %,
the balance consisting of at least one selected from the group consisting of Ti, Zr and Cr, and W, B, C and
inevitable impurities.

**13.** The WC-based cemented carbide member according to claim 12,

wherein in the WC-based cemented carbide,
in terms of molar ratio,
the content of B is 1.5 times to 3 times of the content of Ti, and
the content of C is 0.5 times to 2 times of the content of W.

**14.** The WC-based cemented carbide member according to claim 12 or 13,

wherein in the WC-based cemented carbide,
in terms of mass %,
the content of Ti is more than 0 % and less than 15 %,
the content of B is more than 0 % and less than 6.0 %,
the content of W is more than 23 % and 75.5 % or less, and
the content of C is more than 1.5 % and 5 % or less.

**15.** The WC-based cemented carbide member according to claim 12 or 13,
wherein the cemented carbide portion has a hardness of 45 HRC or more and a thermal conductivity of 10 W/(m·K)
or more.

**16.** A manufacturing method of a WC-based cemented carbide member,

the manufacturing method comprising a melting and solidifying step of irradiating a mixed powder with a heat
source beam, melting the mixed powder, and solidifying it thereafter,
the average composition of the components constituting the mixed powder includes:

in terms of mass %,
Co of 10 % to 40 %; and
Cu of 5 % to 15 %,
the balance consisting of at least one selected from the group consisting of Ti, Zr and Cr, and W, B, C and inevitable impurities.

17. The manufacturing method of a WC-based cemented carbide member according to claim 16,
the manufacturing method further comprising the steps of:

a powder mixing step of pumping a plurality of kinds of powders individually together with a carrier gas and mixing to obtain the mixed powder; and
a mixed powder feeding step of feeding the mixed powder.

# FIG. 1

# FIG. 2

# FIG. 3

# FIG. 4

# FIG. 5

## FIG. 6

## FIG. 7

## INTERNATIONAL SEARCH REPORT

| International application No. |
| --- |
| **PCT/JP2023/002100** |

### A. CLASSIFICATION OF SUBJECT MATTER

*C22C 29/08*(2006.01)i; *C22C 30/02*(2006.01)i; *B33Y 10/00*(2015.01)i; *B33Y 70/00*(2020.01)i; *B22F 10/25*(2021.01)i; *C22C 1/051*(2023.01)i

FI: C22C29/08; C22C30/02; B22F10/25; C22C1/051 G; B33Y70/00; B33Y10/00

According to International Patent Classification (IPC) or to both national classification and IPC

### B. FIELDS SEARCHED

Minimum documentation searched (classification system followed by classification symbols)

C22C29/08; C22C30/02; B33Y10/00; B33Y70/00; B22F10/25; C22C1/051

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2019-151873 A (SUMITOMO ELECTRIC INDUSTRIES) 12 September 2019 (2019-09-12)<br>entire text | 1-17 |
| A | JP 2011-156645 A (MITSUBISHI MATERIALS CORP) 18 August 2011 (2011-08-18)<br>entire text | 1-17 |
| A | WO 2021/039912 A1 (HITACHI METALS, LTD.) 04 March 2021 (2021-03-04)<br>entire text | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 March 2023** | **11 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/002100**

| Patent document cited in search report | | | Publication date (day/month/year) | Patent family member(s) | | | Publication date (day/month/year) |
|---|---|---|---|---|---|---|---|
| JP | 2019-151873 | A | 12 September 2019 | (Family: none) | | | |
| JP | 2011-156645 | A | 18 August 2011 | (Family: none) | | | |
| WO | 2021/039912 | A1 | 04 March 2021 | US | 2022/0290276 | A1 | |
| | | | | EP | 4023355 | A1 | |
| | | | | CN | 114302780 | A | |
| | | | | JP | 2022-050532 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016160500 A

- WO 2021039912 A

**Non-patent literature cited in the description**

- **R. CAR ; M. PARRINELLO.** Unified Approach for Molecular Dynamics and Density-Functional Theory. *PHYSICAL REVIEW LETTERS,* 1985, vol. 55 (22), 2471-2474

- **S. M.-M. DUBOIS et al.** Ideal strength of silicon: An ab initio study. *PHYSICAL REVIEW B,* 2006, vol. 74, 235203